# EUROPÄISCHE PATENTSCHRIFT

(11) **EP 2 282 080 B1**
(45) Veröffentlichungstag und Bekanntmachung des Hinweises auf die Patenterteilung: **12.03.2014**
(21) Anmeldenummer: 10169866.0
(22) Anmeldetag: 16.07.2010
(51) Int. Cl.: F16F 15/26

(54) **Massenausgleichsgetriebe**
Counterbalancing gear
Engrenage d'équilibrage de masse

(30) Priorität: 08.08.2009 DE 102009036794
(43) Veröffentlichungstag der Anmeldung: 09.02.2011
(73) Patentinhaber: Schaeffler Technologies AG & Co. KG, 91074 Herzogenaurach (DE)
(72) Erfinder: Tisch, Siegfried, 70839 Gerlingen (DE)

(56) Entgegenhaltungen:
- EP-A2- 1 775 484
- DE-A1-102005 049 705
- DE-A1-102007 009 800
- DE-A1-102007 017 873
- US-A1- 2009 044 779

## Beschreibung

### Gebiet der Erfindung

Die Erfindung betrifft ein Massenausgleichsgetriebe zum Ausgleich von Massenkräften und/oder Massenmomenten einer Brennkraftmaschine. Das Massenausgleichsgetriebe umfasst eine Ausgleichswelle mit einer rohrförmigen Trägerwelle, die eine auf deren Außenumfang ausgebildete Lagerstelle zur radialen Lagerung der Ausgleichswelle in der Brennkraftmaschine aufweist, und einer mit der Trägerwelle verbundenen Unwuchtmasse, die an einem seitlich der Lagerstelle verlaufenden Verbindungsabschnitt der Trägerwelle mit dieser gefügt ist.

### Hintergrund der Erfindung

Eine derartiges Massenausgleichsgetriebe geht aus dem in der Motortechnischen Zeitschrift (MTZ), Ausgabe 06/2009 veröffentlichten Artikel "Der neue 1,8-I-Vierzylinder-Ottomotor von Mercedes-Benz" hervor. Das Massenausgleichsgetriebe umfasst zwei mit doppelter Kurbelwellendrehzahl gegenläufig rotierende Ausgleichswellen für den Ausgleich von freien Massenkräften zweiter Ordnung. Es handelt sich um gebaute Ausgleichswellen mit einer rohrförmigen Trägerwelle, die in eine Lagergasse der Brennkraftmaschine eingeschoben und anschließend jeweils mit zwei Unwuchtmassen verschraubt werden.

Die radiale Lagerung jeder Ausgleichswelle erfolgt an drei Gleitlagerstellen. Bekanntlich erzeugen jedoch Gleitlagerungen deutlich höhere Reibleistungsverluste als Wälzlagerungen, so dass wälzgelagerte Ausgleichswellen in zunehmendem Maße in Großserie eingesetzt werden. Zudem kann die bei hydrodynamischen Gleitlagern obligatorische Druckmittelzufuhr entfallen, da typischerweise die Schmierung der Wälzlagerungen lediglich durch betrieblich entstehenden Ölnebel erfolgt, wie es in der EP 1 775 484 A2 vorgeschlagen ist.

### Aufgabe der Erfindung

Der vorliegenden Erfindung liegt die Aufgabe zugrunde, ein Massenausgleichsgetriebe der eingangs genannten Art konstruktiv so fortzubilden, dass die betrieblichen Reibleistungsverluste gegenüber der bekannten Gleitlagerung bei gleicher oder verbesserter Lebensdauerfestigkeit der Lagerstellen deutlich reduziert werden.

### Zusammenfassung der Erfindung

Die Lösung dieser Aufgabe ergibt sich aus den kennzeichnenden Merkmalen des Anspruchs 1, während vorteilhafte Weiterbildungen und Ausgestaltungen der Erfindung den Unteransprüchen entnehmbar sind. Demnach soll das Massenausgleichsgetriebe ein die Ausgleichswelle radial wälzlagerndes Nadellager umfassen, dessen Nadelrollen auf der als Innenlaufbahn ausgebildeten Lagerstelle abwälzen. Dabei weist die Innenlaufbahn eine in Umfangsrichtung veränderliche Breite auf dergestalt, dass die Innenlaufbahn diametral gegenüberliegend einer Lastzone, in deren Umfangsbereich die Innenlaufbahn von der mit der Ausgleichswelle umlaufenden Radiallast der Unwuchtmasse beaufschlagt ist, mit einer Breite, die kleiner als die Länge der Nadelrollen ist, deutlich verjüngt oder in Umfangsrichtung unterbrochen ist. Die Verjüngung oder die Unterbrechung der Innenlaufbahn ist durch eine oder mehrere lokal in der Trägerwelle eingeformte Mulden gebildet.

Mit anderen Worten beschränkt sich die Erfindung nicht darauf, die Gleitlagerung der Ausgleichswelle durch eine reibungsgünstigere Wälzlagerung zu ersetzen. Vielmehr ist es in Verbindung damit vorgesehen, die Lagerstelle in dem der Lastzone gegenüberliegenden und lediglich gering oder gar nicht belasteten Umfangsbereich mittels einer oder mehrerer Mulden entweder zu verjüngen oder in Umfangsrichtung vollständig zu unterbrechen, so dass der betrieblich entstehende Ölnebel ungehindert zu den dort lokal über die Innenlaufbahn überstehenden bzw. lokal freistehenden Nadelrollen gelangen kann und - im Hinblick auf die erforderliche Lebensdauer der Lagerung - eine ausreichende Schmierung und/oder Kühlung der Wälzlagerung gewährleistet.

In Weiterbildung der Erfindung soll die Verjüngung der Innenlaufbahn durch zwei an beiden Seiten der Innenlaufbahn angrenzende und vorzugsweise spiegelsymmetrisch zueinander geformte Mulden gebildet sein. Im dazu alternativen Falle der Unterbrechung der Innenlaufbahn - hierunter ist zu verstehen, dass der Umfangswinkel der Innenlaufbahn kleiner als 360° ist - reicht eine Mulde aus, die in Längsrichtung der Ausgleichswelle tunnelartig unter dem Nadellager verläuft und so die ausreichende Ölnebelzufuhr zu den dort freistehenden Nadelrollen gewährleistet.

In einer fertigungstechnisch bevorzugten Weiterbildung der Erfindung sollen die Mulden durch Kaltumformung der Trägerwelle hergestellt sein. Somit sind bei der Werkstoffauswahl der Trägerwelle neben der tribologischen Beanspruchung der Innenlaufbahn auch die Kaltverformbarkeit zu berücksichtigen.

Vorzugsweise sind der Durchmesser der Innenlaufbahn und der Hüllkreisdurchmesser daran angrenzender Wellenabschnitte im wesentlichen gleich groß. Somit kann es sich bei der Trägerwelle um ein Präzisionsstahlrohr handeln, das - abgesehen von der oder den Mulden - einen über die gesamte Längserstreckung konstanten Durchmesser aufweist. Durch die Gestaltung der Lagerstelle ohne radialen Absatz im Umfangsbereich der Lastzone (anders gesagt: die Lagerstelle ist dort weder zurückgesetzt noch erhaben) wird der radiale Bauraumbedarf der Radialwälzlagerung gegenüber einem radial vorspringenden Lagerzapfen minimiert. Im Hinblick auf eine Feinschleifbearbeitung der Innenlaufbahn kann dennoch auch ein solcher Lagerzapfen vorgesehen sein, der zugunsten des geringen radialen Bauraumbedarfs der Wälzlagerung vorzugsweise nur geringfügig erhaben gegenüber den angrenzenden Wellenabschnitten ausgebildet ist.

Außerdem sollen die Mulden in Richtung der Radiallast gesehen im wesentlichen ellipsenförmig sein und sich über einen Umfangswinkel von bis zu 180° erstrecken. Dieser Umfangswinkel darf nicht überschritten werden, um die stillstehende Ausgleichswelle zentriert im Nadellager zu halten. Während die Ellipsenform das Ergebnis einer fertigungsgerechten Umformung der Trägerwelle ist, nimmt der freie Querschnitt, der für den Transport des Ölnebels zu den lokal überstehenden Nadelrollen zur Verfügung steht, mit dem Umfangswinkel der elliptischen Mulde zu. Darüber hinaus nimmt mit der Größe des Umfangswinkels die Exzentrizität des Trägerwellenschwerpunkts in Richtung der Lastzone zu, so dass bei konstant belassener Unwuchtwirkung die Unwuchtmasse und mithin das Gesamtgewicht der Ausgleichswelle reduziert werden können.

### Kurze Beschreibung der Zeichnungen

Weitere Merkmale der Erfindung ergeben sich aus der nachfolgenden Beschreibung und aus den Zeichnungen, in denen Ausführungsbeispiele der Erfindung vereinfacht dargestellt sind. Sofern nicht anders erwähnt, sind dabei gleiche oder funktionsgleiche Merkmale oder Bauteile mit gleichen Bezugszahlen versehen. Es zeigen:
- Figur 1: ein erstes Ausführungsbeispiel einer nadelgelagerten Ausgleichswelle in teilgeschnittener Längsdarstellung;
- Figur 2: die Ausgleichswelle gemäß Figur 1 in Draufsicht;
- Figur 3: ein zweites Ausführungsbeispiel einer nadelgelagerten Ausgleichswelle in teilgeschnittener Längsdarstellung und
- Figur 4: die Ausgleichswelle gemäß Figur 3 in Draufsicht.

### Detaillierte Beschreibung der Zeichnungen

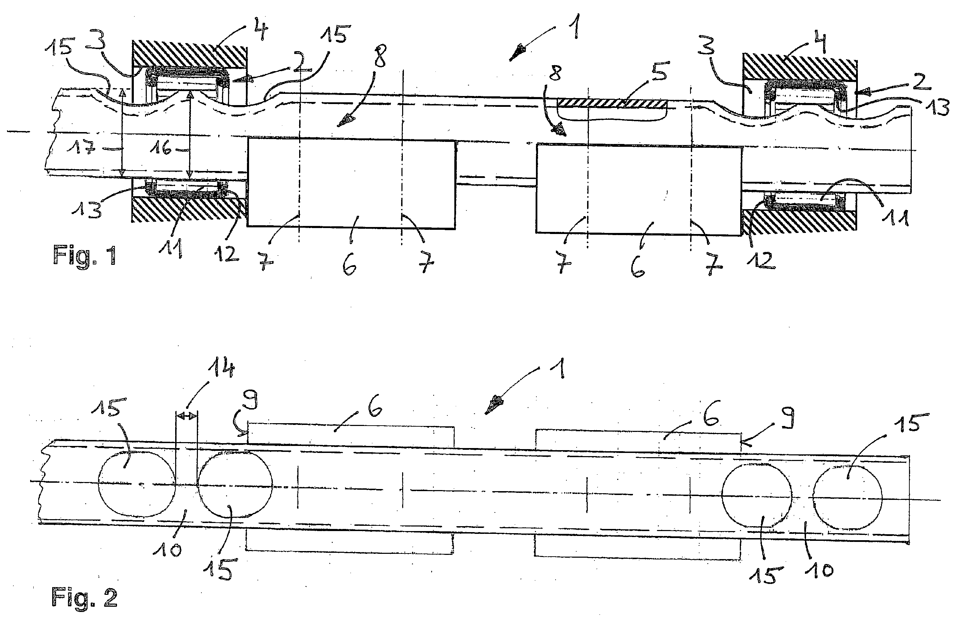

In den Figuren 1 und 2 ist eine von zwei mit doppelter Kurbelwellendrehzahl gegenläufig rotierenden Ausgleichswellen 1, die in Verbindung mit Nadellagern 2 Teil eines Massenausgleichsgetriebes zum Ausgleich der freien Massenkräfte zweiter Ordnung einer Brennkraftmaschine bilden, in Seitenansicht bzw. in Draufsicht dargestellt. Die in der Lagergasse 3 eines ungeteilten Gehäuses 4 der Brennkraftmaschine radial wälzgelagert aufgenommene Ausgleichswelle 1 ist aus einer Trägerwelle 5, die aus einem Präzisionsrohr aus Wälzlagerstahl gefertigt ist, und zwei mit der Trägerwelle 5 hier mittels Verschraubungen gefügten Unwuchtmassen 6 zusammengesetzt. Dargestellt sind die Verschraubungspunkte 7. Das Anschrauben der Unwuchtmassen 6 an dazu angepasste Verbindungsabschnitte 8 der Trägerwelle 5 erfolgt nach dem Einschieben der Trägerwelle 5 in die Lagergasse 3, da der Hüllkreisdurchmesser der Unwuchtmassen 6 größer als der Lagergassendurchmesser ist. Die Stirnflächen 9 der Unwuchtmassen 6 dienen zur Positionierung und Axiallagerung der Ausgleichswelle 1 im Gehäuse 4.

Die radiale Lagerung der Ausgleichswelle 1 erfolgt an Lagerstellen 10, die seitlich der Verbindungsabschnitte 8 verlaufen und als Innenlaufbahn für die Nadelrollen 11 der innenringlosen Nadellager 2 auf dem Außenumfang der Trägerwelle 5 ausgebildet sind. Die auch als Nadelhülsen bezeichneten Nadellager 2 bestehen jeweils aus einem dünnwandigen, spanlos geformten Außenring 12 und einem Nadelkranz mit den in einem Käfig 13 geführten Nadelrollen 11 und werden vor dem Einschieben der Trägerwelle 5 in die Lagergasse 3 eingepresst.

Bei der Belastung der Lagerstellen 10 handelt es sich um sogenannte Punktlast, bei der die von den Unwuchtmassen 6 erzeugte Radiallast mit der Ausgleichswelle 1 umläuft und die Innenlaufbahnen 10 im Umfangsbereich einer Lastzone stationär, d.h. relativ zur Innenlaufbahn 10 im wesentlichen stillstehend beaufschlagt. Im Gegensatz dazu ist der der Lastzone diametral gegenüberliegende Umfangsbereich kaum oder gar nicht belastet. Es ist somit möglich, die Innenlaufbahnen 10 mit einer in Umfangsrichtung veränderlichen Breite zu versehen, die an die in Umfangsrichtung veränderliche Belastung angepasst ist. Das bedeutet konkret, dass jede Innenlaufbahn 10 im Umfangsbereich der Lastzone breiter als die Länge der Nadelrollen 11 ist und im Umfangsbereich diametral gegenüber der Lastzone mit einer Breite 14, die kleiner als die Länge der Nadelrollen 11 ist, deutlich verjüngt ist.

Die Verjüngung der Innenlaufbahnen 10 auf die Breite 14 ist jeweils durch daran angrenzende Mulden 15 gebildet, die an beiden Seiten der Innenlaufbahnen 10 mittels spanloser Kaltumformung lokal in der Trägerwelle 5 eingeformt sind. Wie es aus der Draufsicht auf die Ausgleichswelle 1 in Figur 2 deutlich wird, sind die zur Quermittelebene jeder Innenlaufbahn 10 spiegelsymmetrischen Mulden 15 in Richtung der Radiallast gesehen im wesentlichen ellipsenförmig und erstrecken sich über einen etwa 100° betragenden Umfangswinkel, der symmetrisch zur Unwuchtrichtung auf der lastarmen Seite der Lagerstelle 10 verläuft.

Der gegenüber der bekannten Gleitlagerung etwas höhere Bauraumbedarf der Wälzlagerung ist in radialer Richtung dadurch beschränkt, dass der Durchmesser 16 der Innenlaufbahnen 10 und der Hüllkreisdurchmesser 17 daran angrenzender Wellenabschnitte im wesentlichen gleich groß sind.

Die Funktion der Mulden 15 besteht darin, eine ausreichend große Querschnittsfläche als Übertritt für Ölnebel zu schaffen, der auf diese Weise unmittelbar und in ausreichender Menge zu den über die Innenlaufbahn 10 lokal überstehenden Nadelrollen 11 gelangt. Der Ölnebel entsteht bekanntermaßen während des Betriebs der Brennkraftmaschine in deren Kurbelgehäuse, in dem auch das Massenausgleichsgetriebe angeordnet ist. Ohne derartige Mulden 15 würde ein erhöhtes Verschleißrisiko der Wälzlagerung infolge Mangelschmierung und/oder Kühlung bestehen, da in diesem Fall der Ölnebel allenfalls durch den Ringspalt zwischen dem Außenring 12 und dem dann zylindrischen Außenumfang der Trägerwelle 5 in das Nadellager 2 eindringen könnte.

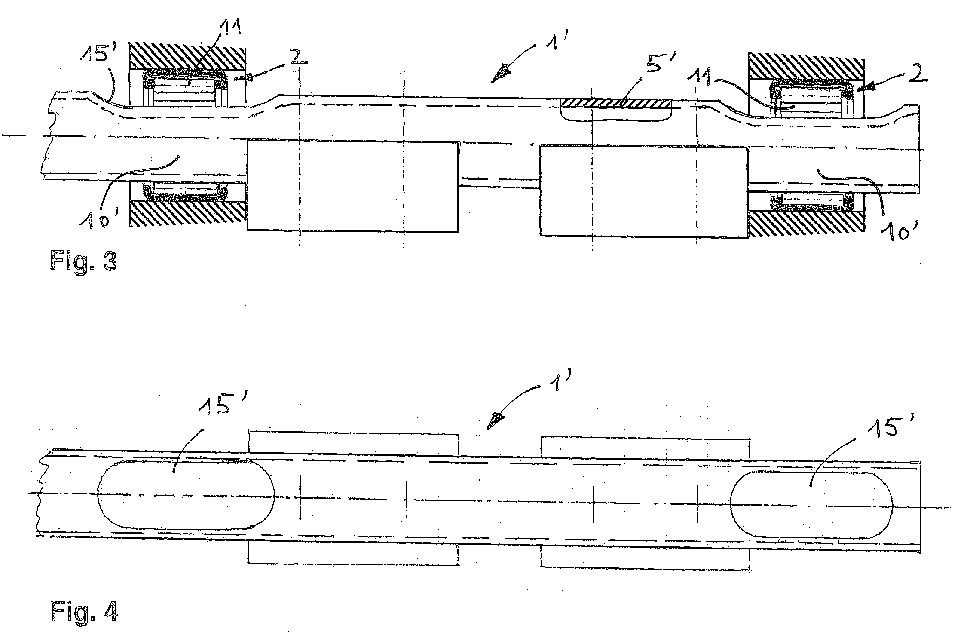

Wie es in den Figuren 3 und 4 mit einer ebenfalls in Seitenansicht bzw. in Draufsicht dargestellten Ausgleichswelle 1' mit Trägerwelle 5' offenbart ist, besteht eine Alternative zu den sich verjüngenden Innenlaufbahnen 10 darin, die Innenlaufbahnen 10' am Umfang zu unterbrechen, d.h. mit einem kleiner als 360° betragenden Laufbahnwinkel zu versehen. Als Unterbrechung dienen in diesem Fall Mulden 15', deren Länge jeweils größer als die Breite des Nadellagers 2 ist und die in Längsrichtung der Ausgleichswelle 1' tunnelartig unterhalb der Nadellager 2 verlaufen. Auf diese Weise werden die nunmehr lokal vollständig freistehenden Nadelrollen 11 von beiden Seiten der Innenlaufbahn 10' mit einer ausreichenden Ölnebelmenge beaufschlagt.

Wie bei dem Ausführungsbeispiel gemäß den Figuren 1 und 2 sind die Mulden15' etwa ellipsenförmig und erstrecken sich jeweils über einen Umfangswinkel der Trägerwelle 5' von etwa 100°.
- 1: **Liste der Bezugszahlen** Ausgleichswelle
- 2: Nadellager
- 3: Lagergasse
- 4: Gehäuse
- 5: Trägerwelle
- 6: Unwuchtmasse
- 7: Verschraubungspunkt
- 8: Verbindungsabschnitt
- 9: Stirnfläche der Unwuchtmasse
- 10: Lagerstelle / Innenlaufbahn
- 11: Nadelrollen
- 12: Außenring
- 13: Käfig
- 14: Breite der verjüngten Innenlaufbahn
- 15: Mulde
- 16: Durchmesser der Innenlaufbahn
- 17: Hüllkreisdurchmesser

## Patentansprüche

1. Massenausgleichsgetriebe zum Ausgleich von Massenkräften und/oder Massenmomenten einer Brennkraftmaschine, umfassend eine Ausgleichswelle (1, 1') mit einer rohrförmigen Trägerwelle (5, 5'), die eine auf deren Außenumfang ausgebildete Lagerstelle (10, 10') zur radialen Lagerung der Ausgleichswelle (1, 1') in der Brennkraftmaschine aufweist, und einer mit der Trägerwelle (5, 5') verbundenen Unwuchtmasse (6), die an einem seitlich der Lagerstelle (10, 10') verlaufenden Verbindungsabschnitt (8) der Trägerwelle (5, 5') mit dieser gefügt ist, **dadurch gekennzeichnet, dass** das Massenausgleichsgetriebe ein die Ausgleichswelle (1, 1') radial wälzlagerndes Nadellager (2) umfasst, dessen Nadelrollen (11) auf der als Innenlaufbahn ausgebildeten Lagerstelle (10, 10') abwälzen, wobei die Innenlaufbahn (10, 10') eine in Umfangsrichtung veränderliche Breite aufweist dergestalt, dass die Innenlaufbahn (10, 10') diametral gegenüberliegend einer Lastzone, in deren Umfangsbereich die Innenlaufbahn (10, 10') von der mit der Ausgleichswelle (1, 1') umlaufenden Radiallast der Unwuchtmasse (6) beaufschlagt ist, mit einer Breite (14), die kleiner als die Länge der Nadelrollen (11) ist, deutlich verjüngt oder in Umfangsrichtung unterbrochen ist, und wobei die Verjüngung oder die Unterbrechung der Innenlaufbahn (10, 10') durch eine oder mehrere lokal in der Trägerwelle (5, 5') eingeformte Mulden (15, 15') gebildet ist.

2. Massenausgleichsgetriebe nach Anspruch 1, **dadurch gekennzeichnet, dass** die Verjüngung der Innenlaufbahn (10) durch zwei an beiden Seiten der Innenlaufbahn (10) angrenzende Mulden (15) gebildet ist.

3. Massenausgleichsgetriebe nach Anspruch 2, **dadurch gekennzeichnet, dass** die beiden Mulden (15) bezüglich der Quermittelebene der Innenlaufbahn (10) spiegelsymmetrisch zueinander geformt sind.

4. Massenausgleichsgetriebe nach Anspruch 1, **dadurch gekennzeichnet, dass** die Mulden (15, 15') durch Kaltumformung der Trägerwelle (5, 5') hergestellt sind.

5. Massenausgleichsgetriebe nach Anspruch 1, **dadurch gekennzeichnet, dass** der Durchmesser (16) der Innenlaufbahn (10) und der Hüllkreisdurchmesser (17) daran angrenzender Wellenabschnitte im wesentlichen gleich groß sind.

6. Massenausgleichsgetriebe nach Anspruch 1, **dadurch gekennzeichnet, dass** die Mulden (15, 15') in Richtung der Radiallast gesehen im wesentlichen ellipsenförmig sind und sich über einen Umfangswinkel von bis zu 180° erstrecken.

## Claims

1. Counterbalancing gear for the balancing of mass forces and/or mass moments of an internal combustion engine, comprising a balancing shaft (1, 1') with a tubular carrier shaft (5, 5') which has a bearing point (10, 10'), formed on its outer circumference, for the radial mounting of the balancing shaft (1, 1') in the internal combustion engine, and with an unbalanced mass (6) which is connected to the carrier shaft (5, 5') and which is joined to the carrier shaft (5, 5') at a connection portion (8) of the latter which runs laterally with respect to the bearing point (10, 10'), **characterized in that** the counterbalancing gear comprises a needle bearing (2) which supports the balancing shaft (1, 1') radially by rolling mounting and the needle rollers (11) of which roll on the bearing point (10, 10') designed as an inner raceway, the inner raceway (10, 10') having a circumferentially variable width such that, diametrically opposite a load zone, in the circumferential region of which the inner raceway (10, 10') is acted upon by the radial load, rotating with the balancing shaft (1, 1'), of the unbalanced mass (6), the inner raceway (10, 10') is tapered markedly or is interrupted in the circumferential direction with a width (14) which is smaller than the length of the needle rollers (11), and the taper or interruption of the inner raceway (10, 10') is formed by one or more depressions (15, 15') integrally formed locally in the carrier shaft (5, 5').

2. Counterbalancing gear according to Claim 1, **characterized in that** the taper of the inner raceway (10) is formed by two depressions (15) adjacent to the two sides of the inner raceway (10).

3. Counterbalancing gear according to Claim 2, **characterized in that** the two depressions (15) are formed mirror-symmetrically to one another with respect to the transverse mid-plane of the inner raceway (10).

4. Counterbalancing gear according to Claim 1, **characterized in that** the depressions (15, 15') are produced by the cold forming of the carrier shaft (5, 5').

5. Counterbalancing gear according to Claim 1, **characterized in that** the diameter (16) of the inner raceway (10) and the enveloping-circle diameter (17) of shaft portions adjacent to it are of essentially identical size.

6. Counterbalancing gear according to Claim 1, **characterized in that** the depressions (15, 15') are essentially elliptical, as seen in the direction of the radial load, and extend over a circumferential angle of up to 180°.

## Revendications

1. Mécanisme d'équilibrage de masse pour l'équilibrage des forces de masse et/ou des couples de masse d'un moteur à combustion interne, comprenant un arbre d'équilibrage (1, 1') avec un arbre de support tubulaire (5, 5') qui présente un point de palier (10, 10') réalisé sur son pourtour extérieur pour le support sur palier radial de l'arbre d'équilibrage (1, 1') dans le moteur à combustion interne, et une masse de déséquilibre (6) connectée à l'arbre de support (5, 5'), laquelle est assemblée à celui-ci au niveau d'une portion de connexion (8) de l'arbre de support (5, 5') s'étendant latéralement par rapport au point de palier (10, 10'), **caractérisé en ce que** le mécanisme d'équilibrage de masse comprend un palier à aiguille (2) supportant radialement par roulement l'arbre d'équilibrage (1, 1'), dont les aiguilles (11) roulent sur le point de palier (10, 10') réalisé en tant que piste de roulement intérieure, la piste de roulement intérieure (10, 10') présentant une largeur variable dans la direction périphérique de telle sorte que la piste de roulement intérieure (10, 10') soit nettement rétrécie ou soit interrompue dans la direction périphérique en position diamétralement opposée à une zone de charge dans la région périphérique de laquelle la piste de roulement intérieure (10, 10') est sollicitée par la charge radiale tournant avec l'arbre d'équilibrage (1, 1') de la masse de déséquilibre (6), avec une largeur (14) qui est inférieure à la longueur des aiguilles (11), et le rétrécissement ou l'interruption de la piste de roulement intérieure (10, 10') étant formé(e) par un ou plusieurs creux (15, 15') formés localement dans l'arbre de support (5, 5').

2. Mécanisme d'équilibrage de masse selon la revendication 1, **caractérisé en ce que** le rétrécissement de la piste de roulement intérieure (10) est formé par deux creux (15) adjacents sur les deux côtés de la piste de roulement intérieure (10).

3. Mécanisme d'équilibrage de masse selon la revendication 2, **caractérisé en ce que** les deux creux (15) sont formés avec une symétrie en miroir l'un par rapport à l'autre par rapport au plan médian transversal de la piste de roulement intérieure (10).

4. Mécanisme d'équilibrage de masse selon la revendication 1, **caractérisé en ce que** les creux (15, 15') sont fabriqués par façonnage à froid de l'arbre de support (5, 5').

5. Mécanisme d'équilibrage de masse selon la revendication 1, **caractérisé en ce que** le diamètre (16) de la piste de roulement intérieure (10) et le diamètre du cercle d'enveloppement (17) des portions d'arbre adjacentes à celle-ci sont essentiellement égaux.

6. Mécanisme d'équilibrage de masse selon la revendication 1, **caractérisé en ce que** les creux (15, 15') sont essentiellement en forme d'ellipse, vus dans la direction de la charge radiale, et s'étendent sur un angle périphérique allant jusqu'à 180°.
